# EUROPEAN PATENT APPLICATION

(11) **EP 3 772 530 A1**
(43) Date of publication of application: **10.02.2021**
(21) Application number: 20189285.8
(22) Date of filing: 04.08.2020
(51) Int. Cl.: C09D 5/03

(54) **A MULTI-VARIABLE PARTICLE SIZE POWDER COATING AND METHOD THEREOF**

(30) Priority: 06.08.2019 US 201962883253 P
(71) Applicant: Tambour Ltd, 4059300 Kfar Netter (IL)
(72) Inventor: BAR-ON, Adva, Netanya 4250364 (IL); GOLAN, Alon, Netanya 4250364 (IL); SHITRIT, Mordechay, Netanya 4250364 (IL); GLIK, Ziva, Netanya 4250364 (IL); GORELIK, Boris, Netanya 4250364 (IL); SHALLY, Forsan Neil, Netanya 4250364 (IL)
(74) Representative: Kasche & Partner

(57) **Abstract**

Terrazzo, consisting of colorful speckled patterns, has a strong visual appeal. A method is taught to prepare a powder coating which provides for a speckled visual affect similar to terrazzo. Two or more powders are prepared, each optionally with a different pigment. One or more of the powders may provide a base layer, in some embodiments, which has a higher concentration relative to the other powders. Additional powder or powders with lower concentration and different pigments should have bigger size particles than powder or powders comprising the base layer. For example, a first powder may have a particle size of about 10 to 40 µm, while the second powder may have a particle size of about 120 to 150 µm. A mixture of the two or more powders is created and applied on a substrate.

## Description

### Technical Field

The disclosure generally relates to powder coatings and particularly to the method of production of a multi-variable particle size powder coating.

### Background

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

Powder coating is a type of coating that is applied as a free-flowing, dry powder. It is used to create a hard, thin finish that is more durable, resilient and protective than conventional paint. It is mainly used for coating metals, household appliances, car and bicycle parts etc. The powder sticks to the substrate electrostatically and then is cured under heat to allow it to flow and form a film. Any substrate can be used that can tolerate the heat of curing powder and that can be electrically grounded to enhance charged particle attachment.

A primary component of powder coatings is resin, which forms the solid film. The selection of the correct grade of resin or blend of resins is imperative, as these form the basic properties of the powder coating material and also control film properties such as melting point, flow and levelling. Regularly used resins include epoxies, polyurethane, polyester and acrylics. Other components of the powder coating may include pigments, fillers, curing agents, catalysts, degassing agents, melt flow additives, wax etc. The homogenous mixture which is formed will contain all the ingredients of that particular mixture.

Powder coatings are prepared by the process of extrusion - mixing the ingredients, and then forcing them through an extruder at a temperature above the softening point of the resin but below the curing temperature of the composition. The mixture is then pulverized to the desire size in suitable grinding equipment (micronizing).

The powder is applied to the substrate by various means, most commonly by electrostatic spray gun. In the electrostatic spray process the powder coating particles are electrostatically charged and the charged particles are attracted to the substrate which is earthed or oppositely charged. The powder coating which does not adhere to the substrate can be recovered and recycled.

Particle size distribution required for most commercial electrostatic spray apparatus is between 10-120µm with a mean particle size by volume within the range of 15-75µm. (all mean particle sizes by volume). Powders typically have at least 90% by volume of particles between 20µm and 100µm and no more than 70% less than 50µm, the mean particle size being 35µm and no more than 60µm.

The powder is then cured on the substrate by application of heat (stoving) for a period of time ranging between 5-30mins and at a temperature in range of 150° to 220° C. It is possible with some resins, especially epoxy resins, to use a curing temperature of 120°C. When the powder particles melt, a film is formed.

Powder coating provides functionality and appearance. Functionally it is protective and may include components that allow for weatherability, stain resistance, dirt resistance, corrosion resistance, chemical resistance, hardness flexibility - all depending on intended use. For appearance the type of resin chosen and different pigments provide characteristics such as color and finishes such as gloss, matte and textures. A powder coating composition must form coherent film on the substrate, have good flow and levelling of the composition on the substrate, good fluidity of the powder - governed by particle size. Particle size is also important for efficiency of powder.

### Brief Description of the Drawings

The foregoing and other objects, features and advantages will become apparent and more readily appreciated from the following detailed description taken in conjunction with the accompanying drawings, in which:
Figure 1 - is a flowchart for a process of powder coating, implemented in accordance with an embodiment.
Figure 2 - is a flowchart illustrating the process of selecting and mixing two powders with different particle sizes during the process of powder coating, implemented according to an embodiment.
Figure 3 - is a schematic illustration of a process for producing powder coating, implemented in accordance with an embodiment

### Detailed Description

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

It is important to note that the embodiments disclosed herein are only examples of the many advantageous uses of the innovative teachings herein. In general, statements made in the specification of the present application do not necessarily limit any of the various claims. Moreover, some statements may apply to some inventive features but not to others. In general, unless otherwise indicated, singular elements may be in plural and vice versa with no loss of generality.
Terrazzo, consisting of colorful speckled patterns, has a strong visual appeal. A method is taught to prepare a powder coating which provides for a speckled visual affect similar to terrazzo. Terrazzo, consisting of colorful speckled patterns, has a strong visual appeal.

A method is disclosed to prepare a powder coating which provides for a speckled visual affect similar to terrazzo. Two or more powders are prepared, each optionally with a different pigment. One or more of the powders may provide a base layer, in some embodiments, which has a higher concentration relative to the other powders. Additional powder or powders with lower concentration and different pigments should have bigger size particles than powder or powders comprising the base layer. For example, a first powder may have a particle size of about 10 to 40 µm, while the second powder may have a particle size of about 120 to 150 µm. A mixture of the two or more powders is created and applied on a substrate.

Additional examples include a method for production of a powder coating having a speckled feature, including: selecting a first powder, which includes a first resin, having a first particle size; selecting a second powder, the second powder comprising a second resin, and having a second particle size; wherein the first powder or the second powder further comprise: a first crosslinking agent, and a first pigment; and mixing the first powder and second powder at a predetermined ratio, resulting in a third powder.

According to one example the crosslinking agent may be compatible with the first resin, the second resin, or both. The first powder may include the first pigment, and the second powder includes a second pigment. The first powder may be based on any of: a thermoplastic polyester, a thermosetting polyester or combination thereof. In an embodiment the first powder may be based on a thermoplastic acrylic, a thermosetting acrylic, or a combination thereof. The first powder may be based on one or more epoxy resins, in another embodiment.

According to another example the second powder may be based on any of: a thermoplastic polyester, a thermosetting polyester, or a combination thereof. In an embodiment the second powder may be based on a thermoplastic acrylic, a thermosetting acrylic or a combination thereof. The second powder may be based on one or more epoxy resins, in another embodiment.

According to yet another example the first powder, the second powder, or both, may further include any of: a crosslinking agent, β-hydroxyalkyl-amide, a pigment, a filler, a catalyst, a degassing agent, a melt flow additive, wax, or any combination thereof. The third powder may be applied and cured on a substrate. The first particle size may be between 10 and 50 µm, and the second particle size may be between 120 and 150 µm.

According to an example, a speckled powder coating includes a first powder, which includes a first resin, having a first particle size; and a second powder, which includes a second resin, having a second particle size; wherein the first powder or the second powder further include: a first crosslinking agent, and a first pigment; and the first powder and second powder are mixed at a predetermined ratio resulting in the speckled powder.

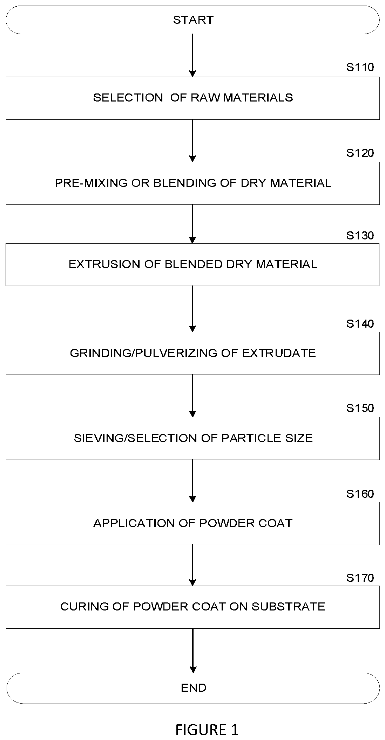

Figure 1 is a flowchart 100 of a method illustrating the process of powder coating. At S110 raw materials are selected and weighed. The raw materials may contain but are not limited to any of the following materials: resin, pigment, filler, crosslinking agent (also known as curing agent or hardener), catalyst, degassing agent, melt flow additive, and wax. Raw materials are weighed in preset ratios and may be dependent on function, appearance and requirements, and also on the capacity of the premixing vessel. These materials are in dry state and therefore may be blended together.

At S120 the dry ingredients are blended in a premixing vessel. The premixing step homogenizes the raw material mix so that a consistent mixture can be fed into an extruder. This may also comminute large resin particles so that the mix can be fed more easily into the extruder. In some embodiments dry blending may be carried out in a high-speed mixer, also known as a turbo mixer, or a tank mixer, which is a type of industrial mixer that is used for mixing raw materials to form a free-flowing powder blend. A high-speed mixer can achieve premixing in a relatively short duration (two to five minutes). Adequate blending can also be accomplished with a slower, less intense process. Some mixers use detachable bowls that allow versatility in managing multiple mixes with the same mixing head.

After the raw materials have been successfully mixed into a homogeneous dry blend, the extrusion process can begin. At this step S130, the composition is final and very few changes can be made (with the exception of reduction of particle size) after this point. During extrusion the resins and non-melting components are mixed throughout the molten mass. The mixed dry components are added into an extruder with different temperature zones where the mixture is sheared against a hard surface until it melts. The resins melt as a result of increasing the temperature above the softening point. In addition, the shear force allows the non-melting components to disperse within the mixture and causes the pigment particles to deagglomerate. The temperature is above the softening point of the resin but below the curing temperature of the composition. The temperature may be anything from 90°- 120 °C depending on components. This is all accomplished as the material is moving rapidly through the extruder. The cooling process can involve introducing the moving extrudate into a set of chilled rolls, which then pass a ribbon of material onto another cooling surface, such as a continuous belt or rotating drum. After the extrudate is adequately cooled, it is broken or crushed into flakes that are suitable for feeding into a grinder.

At S140, the extrudate is crushed to the required size with grinding equipment such as an air-classified mill. In this type of mill the pieces of extrudate are pulled into a chamber wherein a spinning plate crushes the flakes of extrudates with hammers and pins as they enter. The turning of the plate forces the flakes into a corrugated liner that further decreases the particle size. The speed of a classifying wheel present in the chamber determines which particles size will exit thus allowing grinding and distribution of specifically sized particles. From the grinding chamber, the powder is sifted which removes a small fraction of unwanted coarse ground powder. If necessary, this coarse powder can be re-cycled into the grinder again.

At S150 particle size is selected. In some embodiments particle size is between 10-120µm with a mean particle size by volume within the range of 15-75µm (all mean particle sizes by volume). Powders may have at least 90% by volume of particles between 20µm and 100µm and no more than 70% by volume of particles less than 50µm, the mean particle size being 35µm and no more than 60µm. Particle size can be measured by a number of techniques including, for example, sieve analysis and laser diffraction. Sieve analysis relies on vibrating, shaking or vacuuming a weight sample of powder through a screen with calibrated holes. The analysis is quoted as percentage of material retained on a prescribed screen opening size. Multiple sieves can be used to determine percent of material between certain particle sizes. The table below (Table 1) shows standard mesh sizes (US) and screen opening sizes in microns.

**Table 1 - US mesh to micron conversion chart**

| U.S. Mesh size | Microns |
|---|---|
| 100 | 149 |
| 120 | 125 |
| 140 | 105 |
| 170 | 88 |
| 200 | 74 |
| 230 | 62 |
| 270 | 53 |
| 325 | 44 |
| 400 | 37 |
| 500 | 31 |

Application of the powder coat to the substrate at S160 can be implemented using an electrostatic spray gun. In another embodiment the application method used is tribocharging or fluidized bed dipping. Fluidized bed dipping is when the substrate is preheated and dipped into the powder which is held in an air chamber. The fluidized bed is a container that holds the powder material with an air chamber at the bottom. Compressed air is sent through the container and the powder particles are suspended in the airstream. The powder and air mixture behave like a liquid (hence "fluidization"). The preheated substrate is dipped in the powder and when they come into contact the powder fuses to the substrate, creating a thick film on the surface (for example, about 10-20mm in thickness). In the electrostatic spray process the powder coating particles are electrostatically charged and the charged particles are attracted to the substrate which is earthed or oppositely charged. Electrostatic spraying directs the flow of powder, controls the rate of deposition, pattern size and shape, controls the density of spray and charges the powder particles. The powder coating which does not adhere to the substrate can be recovered and recycled.

The final step is curing at S170. The powder coating is then cured on the substrate by application of heat (stoving) for a period of time ranging, for example, between about 5-30 minutes and at a temperature in range of for example, about 150° to 220° C. Gas or electric convection ovens may be used for this step. A cross linking agent (also known as curing agent or hardener) may be used to crosslink the resin at a given temperature. The curing agent can be unreactive at room temperature, and can be selected to react fully between 110ºC and 220ºC. Usual crosslinkers are epoxy, β-hydroxyalkylamide (HAA), amines, anhydrides and blocked isocyanates. In some embodiments, catalysts are used to accelerate the curing speed. It is possible with some resins, especially epoxy, to use a temperature of, for example, about 120°C. When the powder particles melt, the powder particles fuse and flow to form a continuous film with a highly developed crosslinked system.

Thermoplastics and thermosetting plastics are two separate classes of polymers, which are differentiated based on their behavior in the presence of heat. The material difference between the two is that thermoplastics can be re-melted, while thermoset plastics remain in a permanent solid state once hardened. As a result of these physical qualities, thermoplastic materials have low melting points while thermoset plastic products can withstand high temperatures without losing austerity. Thermosetting chemistries can be grouped as epoxies, polyesters, epoxy-polyester hybrids and acrylics.

Older powder coating technology used epoxy resins which are diglycidyl ethers of bisphenol A (DGEBA) crosslinked with amines, anhydrides, dicyandiamide or linear phenoic curatives. While possessing good corrosion resistance, its durability is poor.

Today, polyester resins are widely used along with many different available curing agents. They are durable and weathering resistant binders. Polyester resins are generally classified as carboxyl functional or hydroxyl functional. Carboxy polyesters may be cured with epoxy functional resins and are referred to as polyester-epoxy hybrids. They have good smoothness and mechanical strength. Polyester coatings are sometimes classified by the type of cross linker used and are often referred to as either TGIC powder coatings (from the chemical name Triglycidylisocyanurate TGIC) or by the brand name Primid® powder coatings (from the original range of β -hydroxyalkylamide HAA cross linkers). Hydroxyl functional polyester resins can be crosslinked with several agents, most commonly blocked isophoronediisocyanate (IPDP), blocked free isocyanate (uretdiones), these are referred to as polyurethanes.

Acrylic resin can be of thermoplastic or thermosetting form. Thermoplastic forms means it is one of a group of plastics which can be heated and manipulated repeatedly. Polyester resin and epoxy are thermosetting plastics, which use heat or a catalyst to solidify into a solid mass that will not melt down. Thermosetting acrylic powders are widely used in surface coatings. They can be hydroxy, carboxy or glycidyl functional. The carboxyl functional (COOH) acrylics can be cured with the same materials as the polyesters - such as Primid® products, which are crosslinkers of the chemical class of β-hydroxyalkyl- amide (HAA).

The use of β-hydroxyalkyl amides as thermosetting agents in the field of paints is well known in the art. The thermosetting reaction, which consists in the esterification between the hydroxyl groups of the β-hydroxyalkyl amide and the free carboxyl groups show to have advantageous crosslinking properties.

Some acrylic resins are self-crosslinking. In these type of resins some R groups in the copolymer structure are blocked amide (alkoxymethyl acrylamides) groups like N,N-bis-butoxy-methylamide. During curing process, these groups react with the hydroxyl groups also available on the copolymers leading to a crosslinked network. These types of resins usually have increased hardness, gloss and chemical resistance compared to resins crosslinked with curing agents.

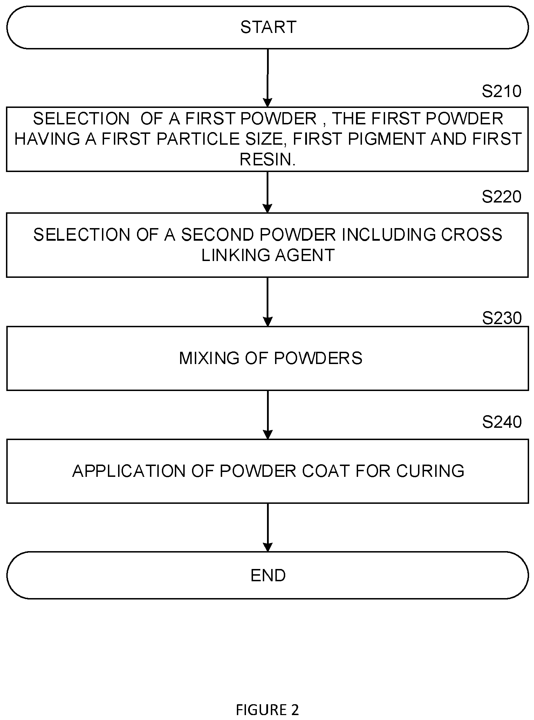

Figure 2 is a flowchart 200 illustrating the process of selecting and mixing two powders with different particle sizes. The first powder includes particles of a first size, and the second powder includes particles of a second size. Figure 2 illustrates the process following the extrusion step (see Fig. 1). A first powder, based on a polyester resin with carboxyl termination is mixed, blended and extruded (as in Fig. 1). Additional components to the polyester-based powder may include but is not limited to a crosslinking agent such as β-hydroxyalkyl-amide, pigment, filler, catalyst, degassing agent, melt flow additive and wax. A second powder based on an polyester resin is mixed, blended and extruded (as in Fig. 1). Each of the first or second powders can be either polyesters or acrylics or epoxy resins. Additional components to the resin based powder include but is not limited to a cross linking agent such as β-hydroxyalkyl-amide, pigment, filler, catalyst, degassing agent, melt flow additive and wax. The above is provided merely as an example. In certain embodiments, a first crosslinking agent may be used for a first resin of the first powder, and a second crosslinking agent may be used for a second resin of the second powder.

In S210 a first powder coating is selected with first particle size, first pigment and first resin. In S220 a second powder is selected with a different particle size, pigment (optionally) and resin. In certain embodiments the second powder may be exclusive of any pigment. In some embodiments particle size is 1.5-10x that of first particle size and the second powder coating including cross linking agent that binds with first and second resins. A non-limiting example illustrated in S220 is a polyester-based powder which is sieved to select smaller particles of about 10 to 40µm and an acrylic-based powder which is sieved to select larger particles of about 120 to 150µm. In some embodiments, the first pigment or second pigment may be optional. In some embodiments, grinder speed and powder type (i.e. resin, filler, etc.) may govern the shape of the particles created, in addition to the size. For example, a particle shape may be jagged (as a result of brittleness) or smooth.

In S230 the two powders are blended together to form a resulting dry powder ready for application of a speckled appearance. In S240 the resulting dry powder is applied to a substrate, whereby application and curing steps occur as described in Fig. 1 above. The dry powder may be applied to the substrate electrostatically. During the curing process, at high temperature, the resins soften and the crosslinking agent causes cross linking and a three-dimensional network of polymer chains is formed.

The two resins having particles with different sizes will show different properties such a viscosity levels resulting in "terarazzo" effect. The resultant film will have a "terrazzo" or speckled effect and may also include higher mechanical strength due to the cross-linking polymers chains. In another embodiment a plurality of pigment combinations can used to obtain different color effects. In an embodiment, the first particle size is between about 40 to about 50 microns. In another embodiment, the second particle size is between about 100 to about 150 microns.

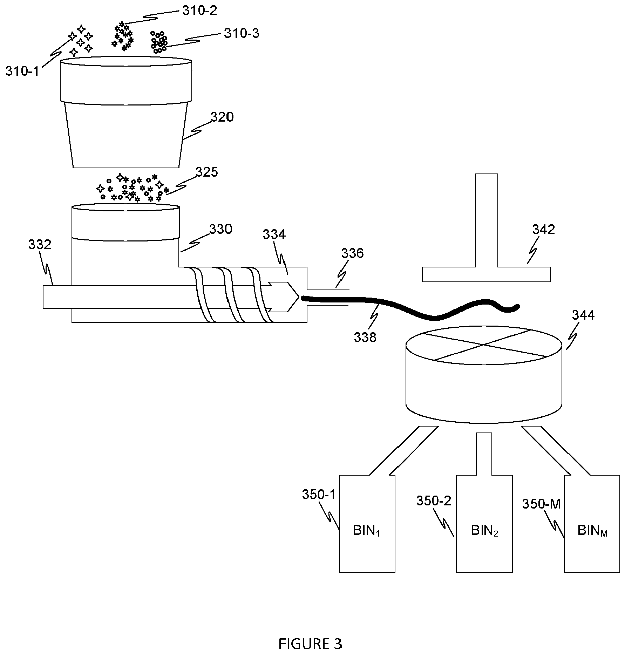

Figure 3 is a schematic illustration of a process for producing powder coating, implemented in accordance with an embodiment. A quantity of first particle type 310-1 is placed in a mixer 320, together with another quantity of a second particle type 310-2 and yet another quantity of a third particle type 310-3. While only 3 particle types are illustrated here, it is readily understood that this is simply to aid in explaining an example, and should not be construed as limiting the disclosure to powders having 3 or less, nor 3 or more, particle types. Rather, any number of suitable particle types may be utilized. The mixer 320 is a machine which agitates or otherwise mechanically mixes the particle types to create a mixture 325 of particles. In an embodiment, the mixture is a dry mixture, containing essentially dry (i.e. solid) particle types. In some embodiments, the mixer 320 may be the premixing vessel as described in S120 of Fig. 1 above.

The mixture 325 is placed into an extruder 330. The extruder 330 includes an extrusion screw 332 which rotates along an axis, causing the mixture 325 to convey through the extrusion pipe 334 and out a nozzle 336, where the diameter of the nozzle is smaller than the diameter of the extrusion pipe 334. The extrusion process is described in more detail for example in S130 of Fig. 1 above.

An extrudate 338 exits the nozzle 336 and is crushed between a top plate 342 and bottom plate 344 of a mill, as described in more detail above. From the mill crushed particles may be classified into bins 350-1 through 350-M (where 'M' is an integer having a value of '1' or more), each bin corresponding to a particle size, or size range.

All examples and conditional language recited herein are intended for pedagogical purposes to aid the reader in understanding the principles of the disclosed embodiment and the concepts contributed by the inventor to furthering the art, and are to be construed as being without limitation to such specifically recited examples and conditions. Moreover, all statements herein reciting principles, aspects, and embodiments of the disclosed embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Unless otherwise specified, the terms 'about' and/or 'close' with respect to a magnitude or a numerical value may imply to be within an inclusive range of -10% to +10% of the respective magnitude or value.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is important to note that the method is not limited to those diagrams or to the corresponding descriptions. For example, the method may include additional or even fewer processes or operations in comparison to what is shown. In addition, embodiments of the method are not necessarily limited to the chronological order as illustrated and described herein.

## Claims

1. A method for production of a powder coating having a speckled feature, comprising:
selecting a first powder, the first powder comprising a first resin, and having a first particle size;
selecting a second powder, the second powder comprising a second resin, and having a second particle size; wherein the first powder or the second powder further comprise: a first crosslinking agent, and a first pigment; and
mixing the first powder and second powder at a predetermined ratio, resulting in a third powder.

2. The method of claim 1, wherein the crosslinking agent is compatible with the first resin.

3. The method of claim 1, wherein the crosslinking agent is compatible with the first resin and second resin.

4. The method of any one or more of claims 1 to 3, wherein the first powder comprises the first pigment, and the second powder further comprises a second pigment.

5. The method of any one more of claims 1 to 4 wherein the first powder is based on any of: a thermoplastic polyester, a thermosetting polyester or combination thereof.

6. The method of any one more of claims 1 to 5, wherein the second powder is based on any of: a thermoplastic polyester, a thermosetting polyester a combination thereof.

7. The method of any one more of claims 1 to 4 wherein the first powder is based on any of: a thermoplastic acrylic, a thermosetting acrylic or a combination thereof.

8. The method of any one more of claims 1 to 5, wherein the second powder is based on any of: a thermoplastic acrylic, a thermosetting acrylic or a combination thereof.

9. The method of any one more of claims 1 to 4 wherein the first powder is based an epoxy or a combination thereof.

10. The method of any one more of claims 1 to 5, wherein the second powder is based on an epoxy or a combination thereof.

11. The method of any one more of claims 1 to 6, wherein the first powder, the second powder, or both, further comprises any of: a crosslinking agent, β-hydroxyalkyl-amide, a pigment, a filler, a catalyst, a degassing agent, a melt flow additive, wax, or any combination thereof.

12. The method of any one more of claims 1 to 11 wherein the third powder is applied and cured on a substrate.

13. The method of any one more of claims 1 to 12, wherein the first particle size is between 10 and 50 µm.

14. The method of any one more of claims 1 to 13, wherein the second particle size is between 120 and 150 µm.

15. A powder coating, comprising:
a first powder, the first powder comprising a first resin, and having a first particle size;
a second powder, the second powder comprising a second resin, and having a second particle size; wherein the first powder or the second powder further comprise: a first crosslinking agent, and a first pigment; and
wherein the first powder and second powder are mixed at a predetermined ratio.
